# EUROPEAN PATENT SPECIFICATION

(11) **EP 1 584 972 B1**
(45) Date of publication and mention of the grant of the patent: **26.09.2007**
(21) Application number: 05007462.4
(22) Date of filing: 05.04.2005
(51) Int. Cl.: G02F 1/1335

(54) **Liquid crystal display device**
Flüssigkristall-Anzeigenvorrichtung
Dispositif d'affichage á cristaux liquides

(30) Priority: 05.04.2004 JP 2004111129
(43) Date of publication of application: 12.10.2005
(73) Proprietor: Toshiba Matsushita Display Technology Co., Ltd., Minato-ku, Tokyo (JP)
(72) Inventor: Hisatake, Yuzo, Yokohama-shi Kanagawa-ken (JP)
(74) Representative: HOFFMANN EITLE

(56) References cited:
- US-B1- 6 281 952
- LEE S H ET AL: "A MULTIMODE-TYPE TRANSFLECTIVE LIQUID CRYSTAL DISPLAY USING THE HYBRID-ALIGNED NEMATIC AND PARALLEL-RUBBED VERTICALLY ALIGNED MODES" JAPANESE JOURNAL OF APPLIED PHYSICS, PUBLICATION OFFICE JAPANESE JOURNAL OF APPLIED PHYSICS. TOKYO, JP, vol. 42, no. 8, PART 1, August 2003 (2003-08), pages 5127-5132, XP001191437 ISSN: 0021-4922
- SEO HERN LEE ET AL: "A NOVEL TRANSFLECTIVE LIQUID CRYSTAL DISPLAY WITH A PERIODICALLY PATTERNED ELECTRODE" JAPANESE JOURNAL OF APPLIED PHYSICS, PUBLICATION OFFICE JAPANESE JOURNAL OF APPLIED PHYSICS. TOKYO, JP, vol. 42, no. 12A, PART 2, 1 December 2003 (2003-12-01), pages L1455-L1458, XP001186595 ISSN: 0021-4922

## Description

The present invention relates to a liquid crystal display device having a liquid crystal layer held between a pair of substrates, and in particular, to a liquid crystal display device that uses transmitted light and reflected light to display images.

In recent years, liquid crystal display devices have been applied to various fields including notebook personal computers, monitors, car navigation systems, scientific electronic calculators, and medium- and small-sized TVs. For example, reflective type liquid crystal display devices reflect ambient light to display images and are thus suitable for displays for portable apparatuses such as mobile PCs, cellular phones, and car navigation systems which are often used outdoors. However, with these liquid crystal display devices, the brightness of a display screen depends on an ambient illumination environment; images are totally invisible in the dark. Thus, the reflective type liquid crystal display device makes images visible even in the dark by reflecting light from a front-light placed in front of the display screen as an auxiliary light source.

In general, the reflective type display device is configured to guide front-light light to the display screen via various light guiding members. Thus, it is difficult to obtain a good contrast characteristic owing to reflection at the interface between these light guiding members (Fresnel reflection). This problem does not occur in a transflective type liquid crystal display device comprising a backlight placed behind the display screen as an auxiliary light source. The transflective type liquid crystal display device displays an image by reflecting ambient light while transmitting backlight light (see, for example, Jpn. Pat. Appln. KOKAI Publication No. 11-242226). In the dark, the contrast characteristic of the transflective type liquid crystal display device is superior to that of the reflective type liquid crystal display device. Accordingly, at present, most displays for portable apparatuses use transflective type liquid crystal display devices.

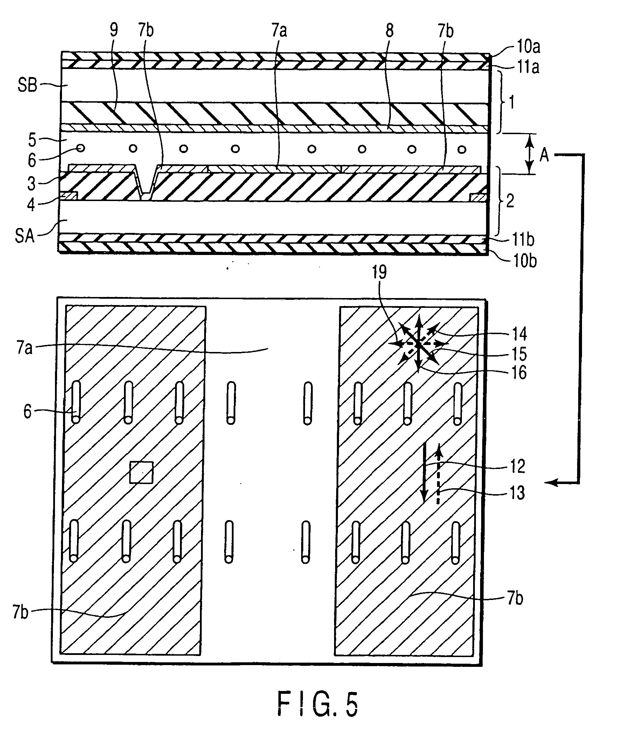

Now, with reference to FIGS. 5 to 12, description will be given of the structure and operational principle of conventional transflective type liquid crystal display devices.

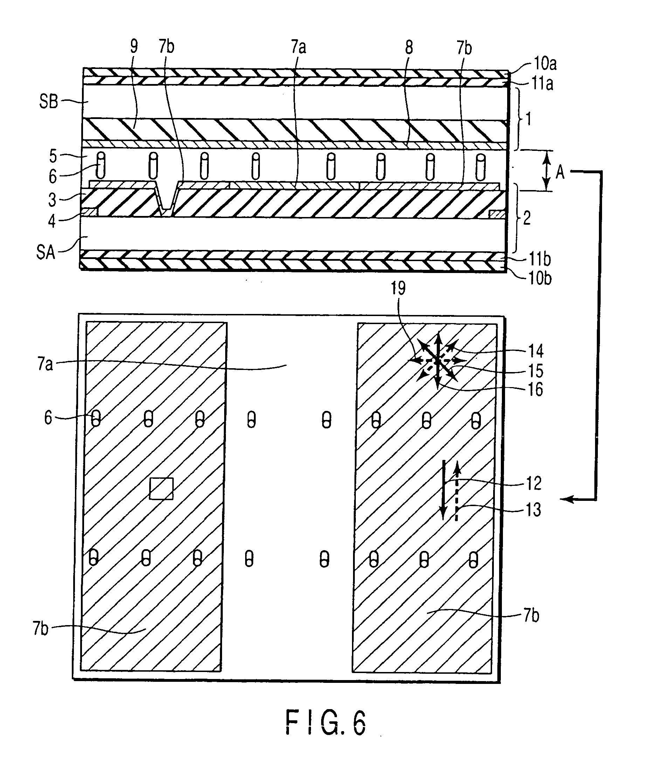

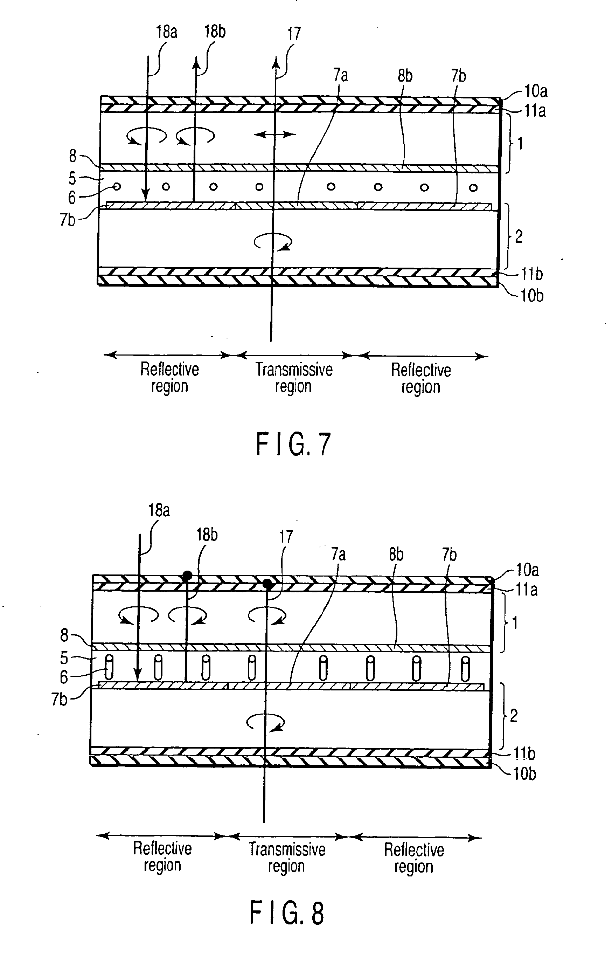

For example, the conventional transflective type liquid crystal display device shown in FIGS. 5 to 8 is configured such that a liquid crystal layer 5 is held between a counter substrate 1 and a TFT substrate 2 and has a substantially uniform thickness. In FIGS. 5 and 6, the plan structure of a pixel is shown in association with the range A of the sectional structure of the pixel. In this liquid crystal display device, a plurality of pixel electrodes are placed on the TFT substrate 2. A common electrode is placed on the counter substrate 1 to face the pixel electrodes. Each of the pixel electrodes is formed of a transparent electrode 7a and a reflective electrode 7b. The common electrode is formed of a transparent electrode 8. Both transparent electrode 7a and reflective electrode 7b are located on an insulating layer 3 covering wiring 4 such as signal lines. The liquid crystal layer 5 includes a nematic liquid crystal having a positive dielectric anisotropy. At the no-voltage-applied time where no voltage is applied between the pixel electrode and the common electrode, liquid crystal molecules 6 are set to a twisted alignment or homogeneous alignment as shown in FIG. 5 to obtain a quarter retardation. At the voltage-applied time where a voltage is applied between the pixel electrode and the common electrode, the liquid crystal molecules 6 are aligned vertically as shown in FIG. 6 by an electric field applied between these electrodes in a normal direction of the liquid crystal layer 5. At this state, the retardation of the liquid crystal layer 5 becomes almost zero. Further, polarizing plates 10a and 10b and quarter wavelength plates 11a and 11b are attached to outer surfaces of the counter substrate 1 and the TFT substrate 2, respectively, so that absorption axes 15 and 14 of the polarizing plates 10a and 10b and slow axes 16 and 19 of the quarter wavelength plates 11a and 11b cross at right angles to function as circular polarizers. Thus, at the no-voltage-applied time in FIG. 7, a quarter retardation is produced in the liquid crystal layer 5. A bright display state is established in both a reflective region corresponding to the reflective electrode 7b and a transmissive region corresponding to the transparent electrode 7a. On the other hand, at the voltage-applied time in FIG. 8, no retardation is produced in the liquid crystal layer 5. Consequently, both reflective region and transmissive region are brought into a dark display state.

However, with the above transflective type liquid crystal display device, the retardation of the liquid crystal layer 5 must be a quarter in order to enable display in the reflective region. Accordingly, the retardation of the transmissive region is necessarily a quarter. As shown in FIGS. 7 and 8, the ambient light passes through the liquid crystal layer 5 twice in the reflective region. Consequently, a half retardation is obtained from the reflective region as a whole. However, the backlight light passes through the liquid crystal layer 5 only once in the transmissive region. As a result, only a quarter retardation is obtained from the transmissive region. Since the electric field is applied in the normal direction of the liquid crystal layer 5, the retardation of the liquid crystal layer 5 exceeds zero at the voltage-applied time. Thus, the retardation of the liquid crystal layer 5 is controlled in a range reduced from the quarter. Accordingly, if the transflective type liquid crystal display device is configured to obtain a dark display state at the voltage-applied time in FIG. 8, linearly polarized light is emitted, as shown in FIG. 7, from the liquid crystal layer 5 in the bright display state established at the no-voltage applied time. Substantially 50% of the emitted light is thus absorbed by the polarizing plate 10a. Thus, disadvantageously, the display of the transmissive region becomes darkish.

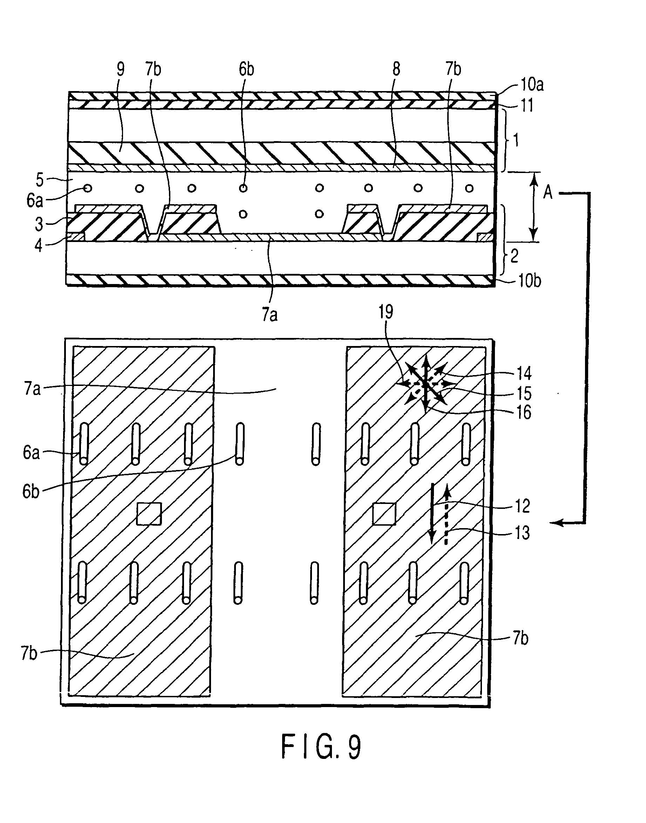

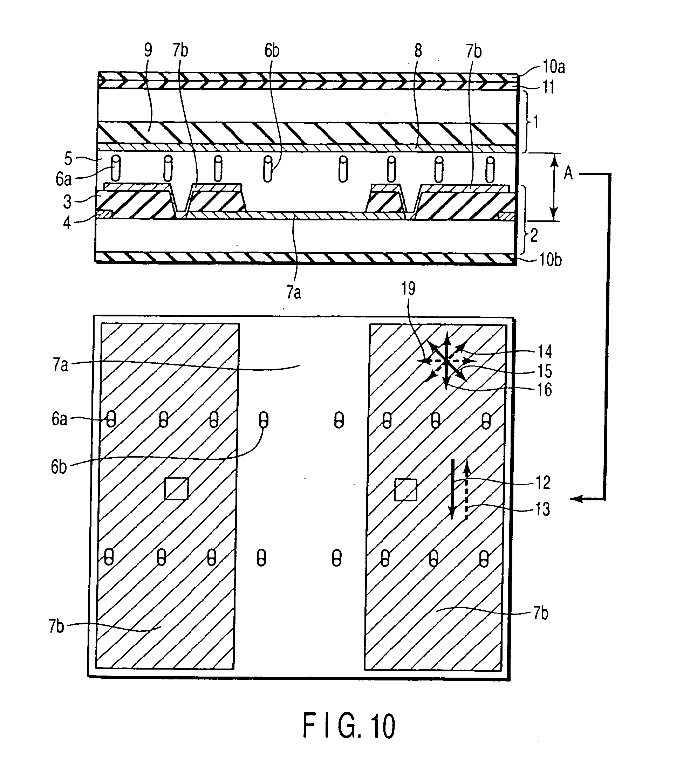

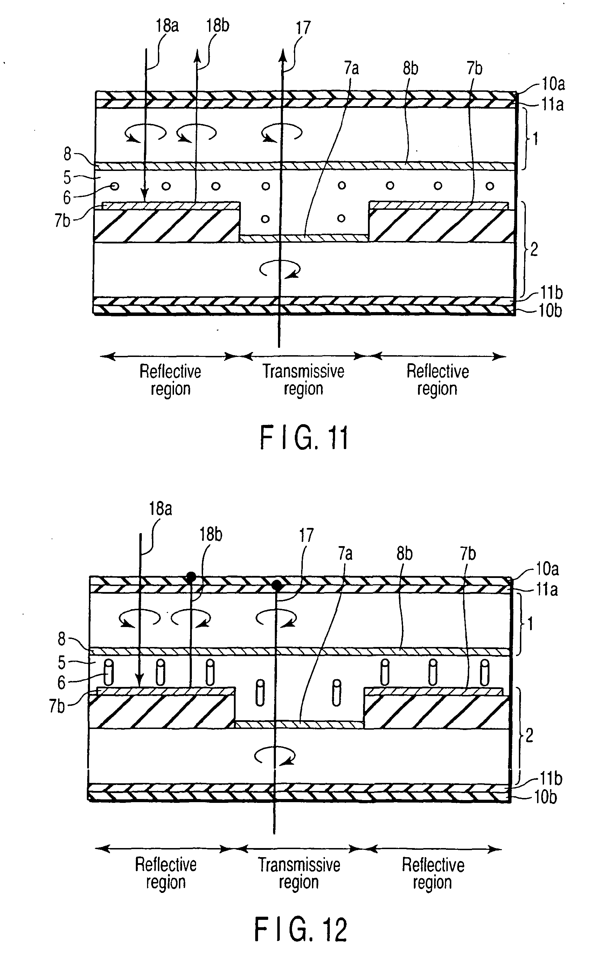

This problem can be solved using, for example, a conventional transflective type liquid crystal display device shown in FIGS. 9 to 12. The transflective type liquid crystal display device is configured such that the liquid crystal layer 5 is held between the counter substrate 1 and the TFT substrate 2 and has different thicknesses in the reflective and transmissive regions of each pixel. In FIGS. 9 and 10, the plan structure of a pixel is shown in association with the range A of the sectional structure of the pixel. In this transflective type liquid crystal display device, an insulating layer 3 is formed as a base only for the reflective electrode 7b. A difference in height between the transparent electrode 7a and the reflective electrode 7b is equal to the thickness of the insulating layer 3. The difference in height is determined to set the thickness of the liquid crystal layer 5 in the transmissive region to be substantially twice as large as that in the reflective region. As a result, the retardation of the liquid crystal layer 5 becomes substantially a half at the no-voltage-applied time. Accordingly, the retardation of the liquid crystal layer 5 becomes a quarter in the reflective region. In this case, the retardation of the liquid crystal layer 5 is controlled by a liquid-crystal-applied voltage in a.range of substantial zero to the quarter to specify the brightness of the display. In contrast, in the transmissive region, the retardation of the liquid crystal layer 5 is controlled by the liquid-crystal-applied voltage between substantial zero and the half to specify the brightness of the display. As a result, the total amount of retardation is controlled in the range of zero to the half in either of the transmissive and reflective regions. Therefore, as shown in FIG. 11, in the bright display state, circularly polarized light is incident on the quarter wavelength plate 11a of the counter substrate 1 and can be almost transmitted through the polarizing plate 10a on the counter substrate 1.

However, in manufacturing the transflective type liquid crystal display device shown in FIGS. 9 to 12, it is necessary that both thicknesses of the insulating layer 3 and liquid crystal layer 5 located within the reflective region are controlled to obtain two different thicknesses in the liquid crystal layer 5 for each pixel. This arises a problem of narrowing the process margins. Further, in the transflective liquid crystal display device shown in FIGS. 5 to 8 and the transflective liquid crystal display device shown in FIGS. 9 to 12, two electrode patterns for the transparent electrode 7a and reflective electrode 7b must be provided on the TFT substrate 2. This increases the number of processes compared to general transmissive or reflective type liquid crystal display devices. Moreover, in the transflective liquid crystal display device shown in FIGS. 5 to 8 and the transflective liquid crystal display device shown in FIGS. 9 to 12, the two quarter wavelength plates 11a and 11b must be arranged on the counter substrate 1 and TFT substrate 2, respectively. This increases the total cost of materials.

US 6 281 952 A discloses a liquid crystal display device according to the preamble of claim 1.

It is an object of the present invention to provide a transflective type liquid crystal display device that can provide images of sufficient brightness and contrast in various illumination environments without requiring any complicated structures.

According to the present invention, there is provided a liquid crystal display device according to claim 1.

In this liquid crystal display device, the alignment state of liquid crystal molecules is controlled by the vertical electric field in the reflective region and by the lateral electric field in the transmissive region. In this case, it is unnecessary to provide the reflective electrode together with a transparent electrode on the first substrate or to obtain different thicknesses in the liquid crystal layer. Therefore, the present liquid crystal display device can be manufactured using a process equivalent to that for a liquid crystal display device that uses a selected one of transmitted light and reflected light for display. Moreover, the above structure does not require a quarter wavelength plate witch is conventionally provided on the first substrate.

Preferred embodiments of the invention are indicated in the dependent claims.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the sectional and plan structures of each of pixels provided in a transflective liquid crystal display device according to an embodiment of the present invention, as well as the alignment state of liquid crystal molecules at a no-voltage-applied time;
FIG. 2 is a diagram showing the alignment state of liquid crystal molecules which is obtained at a voltage-applied time in the pixel of the sectional and plan structures shown in FIG. 1;
FIG. 3 is a sectional view for explaining transmission, absorption, and polarization of incident light incident on the pixel whose liquid crystal molecules are in the alignment state at the no-voltage-applied time as shown in FIG. 1;
FIG. 4 is a sectional view for explaining transmission, absorption, and polarization of incident incident light incident on the pixel whose liquid crystal molecules are in the alignment state at the voltage-applied time as shown in FIG. 2;
FIG. 5 is a diagram showing the sectional and plan structures of each of pixels provided in a conventionally-known transflective liquid crystal display device, as well as the alignment state of liquid crystal molecules at the no-voltage-applied time;
FIG. 6 is a diagram showing the alignment state of liquid crystal molecules which is obtained at the voltage-applied time in the pixel of the sectional and plan structures shown in FIG. 5;
FIG. 7 is a sectional view for explaining transmission, absorption, and polarization of incident light incident on the pixel whose liquid crystal molecules are in the alignment state at the no-voltage-applied time as shown in FIG. 5;
FIG. 8 is a sectional view for explaining transmission, absorption, and polarization of incident light incident on the pixel whose liquid crystal molecules are in the alignment at the voltage-applied time as shown in FIG. 6;
FIG. 9 is a diagram showing the sectional and plan structures of each of pixels provided in another conventionally-known transflective liquid crystal display device, as well as the alignment state of liquid crystal molecules at the no-voltage-applied time;
FIG. 10 is a diagram showing the alignment state of liquid crystal molecules which is obtained at the voltage-applied time in the pixel of the sectional and plan structures shown in FIG. 9;
FIG. 11 is a sectional view for explaining transmission, absorption, and polarization of incident light incident on the pixel whose liquid crystal molecules are in the alignment state at the no-voltage-applied time as shown in FIG. 9; and
FIG. 12 is a sectional view for explaining transmission, absorption, and polarization of incident light incident on the pixel whose liquid crystal molecules are in the alignment state at the voltage-applied time as shown in FIG. 10.

With reference to the accompanying drawings, description will be given of a transflective type liquid crystal display device according to an embodiment of the present invention.

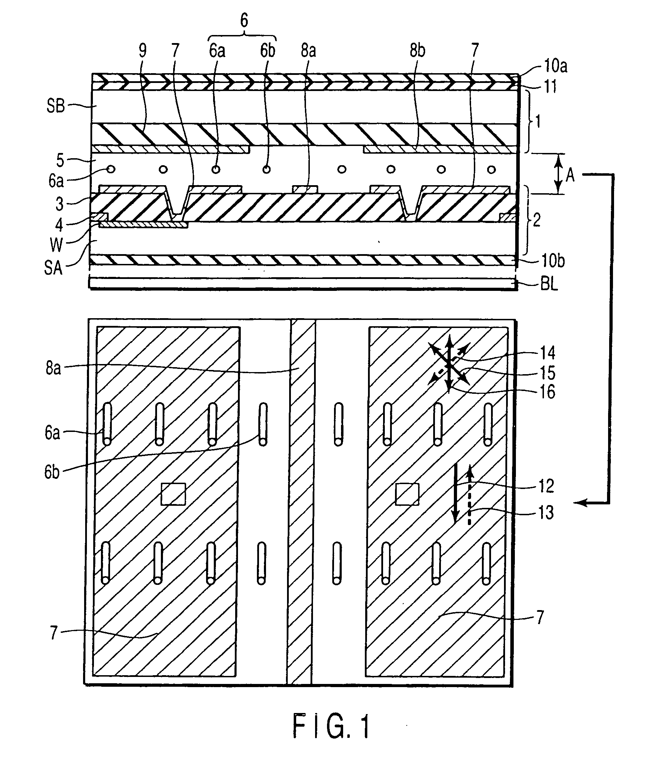

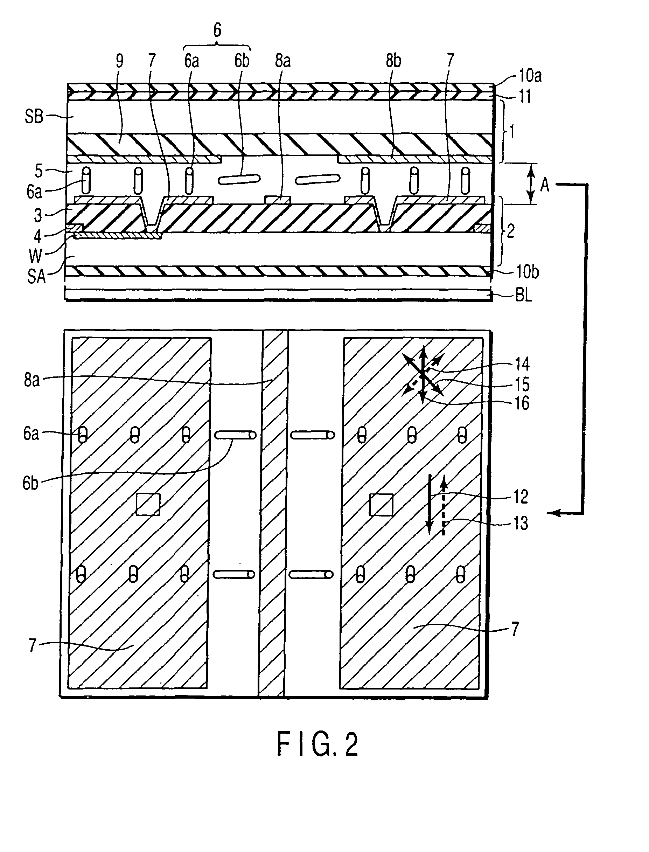

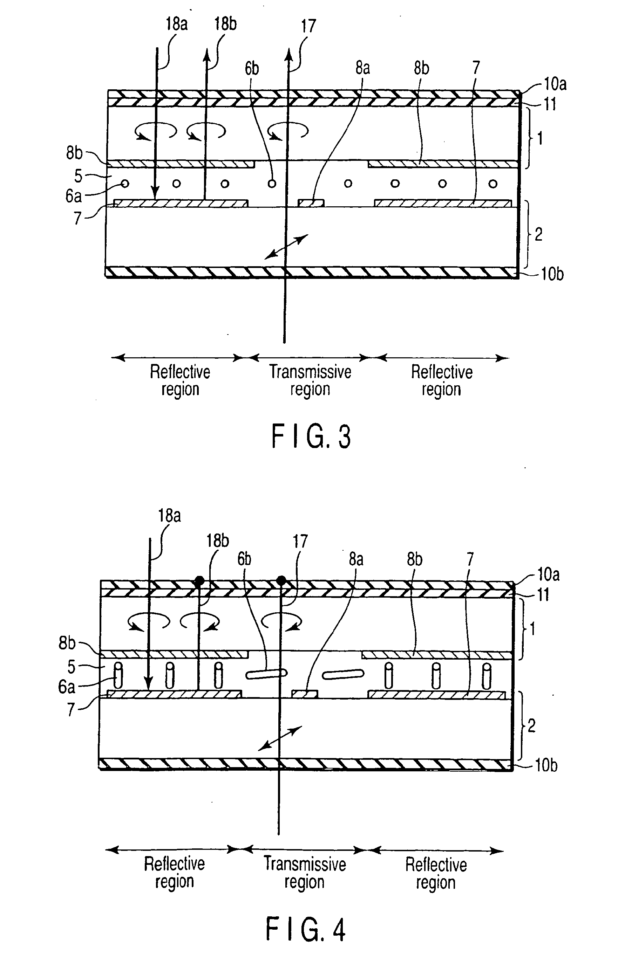

FIG. 1 shows the sectional and plan structures of each of pixels provided in a transflective liquid crystal display device according to an embodiment of the present invention, as well as the alignment state of liquid crystal molecules at a no-voltage-applied time. FIG. 2 shows the alignment state of liquid crystal molecules which is obtained at a voltage-applied time in the pixel. FIG. 3 conceptually shows transmission, absorption, and polarization of incident light incident on the pixel whose liquid crystal molecules are in the alignment state at the no-voltage-applied time. FIG. 4 conceptually shows transmission, absorption, and polarization of incident light incident on the pixel whose liquid crystal molecules are in the alignment state at the voltage-applied time. In FIGS. 1 and 2, the plan structure of the pixel is shown in association with the range A of the sectional structure of the pixel. Further, in FIGS. 1 to 4, similar components are denoted by the same reference symbols. Duplicate descriptions will be omitted.

This transflective liquid crystal display device is configured such that a liquid crystal layer 5 is held between a counter substrate 1 and a TFT substrate 2 and has a substantially uniform thickness, as shown in FIGS. 1 to 4. The TFT substrate 2 has pairs of first and second reflective electrodes 7 and 8a are arrayed substantially in a matrix, thin film transistors W arranged adjacent to the pairs of first and second reflective electrodes 7 and 8a, and a transparent insulating substrate SA such as glass which supports the pairs of first and second reflective electrodes 7 and 8a and thin film transistors W. The first and second reflective electrodes 7, 8a serve as a reflective electrode section which is located in an inner surface of the TFT substrate 2 and reflects light incident from the counter substrate 1 to the liquid crystal layer 5. The counter substrate 1 has a transparent electrode 8b, a color filter layer 9, and a transparent insulating substrate SB such as glass which supports the transparent electrode 8b and the color filter layer 9. The transparent electrode 8b serves as a counter electrode section which is located in an inner surface of the counter substrate 1 and associated with the reflective electrode section to apply a vertical electric field to the liquid crystal layer 5 in a reflective region corresponding to a range of the reflective electrode section. The vertical electric field is an electric field applied in a normal direction of the liquid crystal layer 5.

The first and second reflective electrodes 7 and 8a are spaced from each other and serve as a pair of electrodes which are located in the inner surface of the TFT substrate 2 and associated with each other to apply a lateral electric field to the liquid crystal layer 5 in a transmissive region existing outside the reflective region and allowing transmission of light incident from the TFT substrate 2 to the liquid crystal layer 2. The lateral electric field is an electric field applied in a horizontal direction substantially parallel to plane of the TFT substrate 2 which is perpendicular to the normal direction of the liquid crystal layer 5. In this case, the first reflective electrode 7 is a pixel electrode, and the second reflective electrode 8a is a common electrode arranged in lateral with the pixel electrode. The lateral electric field is applied from the pixel electrode (reflective electrode 7) and common electrode (reflective electrode 8a). Further, the transparent electrode 8b is a common electrode facing the reflective electrodes 7, and electrically connected to the common electrode (reflective electrode 8a) of the TFT substrate 2. The vertical electric field is applied from the pixel electrode (reflective electrode 7) and common electrode (transparent electrode 8b). The wiring 4 such as signal lines and the thin film transistors W are located over the transparent insulating substrate SA and covered with the insulating layer 3. The reflective electrode 7 and the reflective electrode 8a are arranged on the same plane which is a surface of the insulating layer 3. In this case, the insulating layer 3 is formed of a transparent resist and a transparent organic film. The reflective electrode 7 and the reflective electrode 8a are formed and separated from each other by patterning a metal layer formed to cover the insulating layer 3. A suitable material for the metal layer is aluminum (Al) or the like, which provides the reflective electrodes 7 and 8a with a high reflectance. The reflective electrode 7 constitutes a drain electrode connected to the thin film transistor W via contact holes formed in the insulating layer 3. The signal line of the wiring 4 constitutes a source electrode connected to the thin film transistor W. Further, the wiring 4 and the thin film transistor W are arranged outside the transmissive region. Specifically, the wiring 4 is placed between the pixels as a light-shielding film. The thin film transistor W is arranged to overlap the wiring 4 and reflective electrode 7 as a pixel switching device.

The color filter layer 9 includes colored layers of red R, green G, and blue B arranged in stripes on the transparent insulating substrate SB. The transparent electrode 8b is, for example, of an ITO (Indium Tin Oxide) layer formed on the color filter layer 9. The colored layers of R, G, and B face the columns of the pairs of reflective electrodes 7 and 8a, arranged substantially in a matrix on the side of the TFT substrate 2. Thus, three pairs of reflective electrodes 7 and 8a arranged in a row direction and facing the colored layers of R, G, and B are defined as three subpixels constituting one color pixel.

In each pixel (each subpixel of the color pixel), the alignment state of liquid crystal molecules is controlled based on the vertical electric field in the reflective region corresponding to a range of the reflective electrode 7, and based on the lateral electric field in the transmissive region outside the reflective electrode 7. In this case, the retardation of the liquid crystal layer 5 must be a quarter in the reflective region. However, a sufficient light utilization efficiency is obtained even when the retardation of the liquid crystal layer 5 is a quarter in the transmissive region. Thus, the thickness of the liquid crystal layer 5 is equal in the transmissive region and in the reflective region. Images are displayed utilizing both reflected light obtained from the reflective region of each pixel and transmitted light obtained from the transmissive region of the pixel.

The liquid crystal layer 5 contains a nematic liquid crystal having a positive dielectric anisotropy as a liquid crystal component. The nematic crystal may be, for example, ZLI-4792, manufactured by Merck Ltd., Japan. At the no-voltage-applied time where no voltage is applied between the pixel electrode and the common electrode, liquid crystal molecules are in a homogeneous alignment to obtain a quarter retardation.

In order to vary the slow axis of the liquid crystal layer 5 through substantially 90° in the transmissive region, since liquid crystal molecules are set in the homogeneous alignment in the liquid crystal layer 5 at the no-voltage-applied time, it is necessary that the alignment direction of the liquid crystal molecules is almost orthogonal to the direction of the lateral electric field. Thus, horizontal alignment films (not shown) are formed in contact with the liquid crystal layer 5 to cover the reflective electrodes 7 and 8a of the TFT substrate 2 and the transparent electrode 8b of the counter substrate 1. The horizontal alignment films are obtained as a result of a rubbing process effected on an alignment film material that is SE7492, manufactured by NISSAN CHEMICAL INDUSTRIES LTD. and applied to each of the substrates. As shown in FIGS. 1 and 2, the rubbing process is effected in the rubbing direction 12 for the alignment film material on the counter substrate 1 and in the rubbing direction 13 for the alignment film material on the TFT substrate 2. For implementation of the liquid crystal molecules aligned as shown in FIGS. 1 and 2, the actual rubbing directions are offset, by about 1° , from the longitudinal direction of the common electrode (reflective electrode 8a) on the TFT electrode 2, thus allowing the alignment direction of the liquid crystal molecules to be changed more uniformly by the lateral electric field.

Further, a set of polarizing plate 10a and quarter wavelength plate 11 is attached to an outer surface of the counter substrate 1. A polarizing plate 10b is attached to an outer surface of the TFT substrate 2. The absorption axis 14 of the polarizing plate 10b is set at an angle of 45° to the alignment direction of the liquid crystal molecules at the no-voltage-applied time. Linearly polarized light transmitted through the polarizing plate 10b is converted by the liquid crystal layer 5 into right circularly polarized light and left circularly polarized light. The absorption axis 15 of the polarizing plate 10a is set in a direction 15 shown in FIGS. 1 and 2. The slow axis 16 of the quarter wavelength plate 11 is set in a direction shown in FIGS. 1 and 2. The set of quarter wavelength plate 11 and polarizing plate 10a serves as a circular polarizer. The quarter wavelength plate 11 is obtained by uniaxially orientating polycarbonate or an arton resin, or an inverse wavelength dispersion resin manufactured by TEIJIN LIMITED, or biaxially orienting one of these materials to provide it with a function for compensating for the viewing angle characteristics of the polarizing plates 10a and 10b. Alternatively, a half wavelength plate and a quarter wavelength plate may be combined together so as to eliminate the wavelength dispersion characteristic of the retardation. In this case, the slow axis obtained as a whole may be set in the above direction.

In the transmissive region, the alignment direction of the liquid crystal molecules is controlled by the lateral electric field so as to maintain the retardation of the liquid crystal layer 5 and change the direction of the slow axis for the retardation. That is, the liquid crystal molecules in the transmissive region operate in the in-plane switching mode (IPS mode) conventionally used for the transmissive type. In this case, the retardation of the liquid crystal layer 5 is set to a quarter at a wavelength of 550 nm, which is a visible light wavelength having a high luminosity factor. Here, the product Δnd of the refractive anisotropy Δn of the liquid crystal composition in the liquid crystal layer 5 and the thickness d of the liquid crystal layer 5 is assumed to be 132 nm. It is also assumed that light incident from the TFT substrate 2 to the liquid crystal layer 5 is linearly polarized similarly to light emitted by a backlight BL and then transmitted through the polarizing plate 10b. Then, the polarization state of light transmitted through the liquid crystal layer 5 can be controlled between right circularly polarized light and left circularly polarized light. (In FIGS. 3 and 4, reference numeral 17 conceptually denotes the direction in which light travels, the amount of light transmitted, and the polarization state in connection with the transmissive region. Reference numeral 18a conceptually denotes the direction in which light incident on the reflective electrodes 7 travels, the amount of light transmitted, and the polarization state in connection with the reflective region. Reference numeral 18b conceptually denotes the direction in which light reflected by the reflective electrode 7 travels, the amount of light transmitted, and the polarization state in connection with the reflective region. These are shown by the same reference numerals in the figures of the conventional example.)

Light transmitted through the liquid crystal layer 5 is converted by the quarter wavelength plate 11 into linearly polarized light whose direction is set orthogonal between the voltage-applied time and the no-voltage-applied time, as shown in FIGS. 3 and 4. This light can be controlled between a state in which almost 100% of it is transmitted through the polarizing plate 10a and a state in which almost 100% of it is absorbed by the polarizing plate 10a. In contrast, in the reflective region, the liquid crystal molecules operate similarly to the reflective region of the conventional transflective liquid crystal display device shown in FIG. 5, by means of the vertical electric field between the reflective electrode 7 and the transparent electrode 8b.

At the no-voltage-applied time in FIG. 3, the liquid crystal layer 5 provides a quarter retardation. Consequently, both reflective region and transmissive region are brought into the bright display state. On the other hand, at the voltage-applied time in FIG. 4, no retardation is produced in the liquid crystal layer 5. Consequently, both reflective region and transmissive region are brought into the dark display state.

In the transflective liquid crystal display device according to the present embodiment, the second reflective electrode 8a is spaced from the first reflective electrode 7 to transmit light incident from the TFT substrate 2 to the liquid crystal layer 5 while applying a lateral electric field to the liquid crystal layer 5. Thus, the alignment state of the liquid crystal molecules 6a in the reflective region is controlled by the vertical electric field, and the alignment state of the liquid crystal molecules 6b in the transmissive region are controlled by the lateral electric field. In this case, it is unnecessary to provide the reflective electrode together with a transparent electrode on the TFT substrate 2 or to obtain different thicknesses in the liquid crystal layer 5. Therefore, the present liquid crystal display device can be manufactured using a process equivalent to that for a liquid crystal display device that uses a selected one of transmitted light and reflected light for display. Moreover, by providing the quarter wavelength plate 11 on the counter substrate 1 as described above, it is unnecessary to provide any other quarter wavelength plate on the TFT substrate 2.

The common electrode (transparent electrode 8b) of the counter substrate 1 is not provided for the transmissive region. However, even if the common electrode (transparent electrode 8b) of the counter substrate 1 is provided for the reflective and transmissive regions, a sufficient lateral electric field is ensured, thus enabling the above control. In this case, the luminance of the transmissive region decreases slightly by an amount corresponding to the transmittance of ITO, which is the material of the transparent electrode 8b. However, it is possible to obviate the need for patterning of the ITO layer which is carried out to provide a common electrode (transparent electrode 8b) on the counter substrate 1.

Further, light must pass through the color filter layer 9 twice in the reflective region. Accordingly, the amount of light transmitted through the reflective region is slightly larger than that transmitted through the transmissive region if the colors of the color filter layer 9 have a uniform density. Thus, by setting the density of the colors in the color filter layer 9 so that the density in the reflective region is lower than that in the transmissive region, it is possible to provide the reflective region with a sufficient luminance while providing the transmissive region with a sufficient color density and a sufficient color reproduction range. Alternatively, the color reproduction range of the reflective region can be made almost comparable to that of the transmissive region by reducing the thickness of the color filter layer 9 in the reflective region compared to the transmissive region, forming a hole in a part of the color filter layer in the reflective region, or reducing the concentration of pigments or dyes used in the reflective region of the color filter layer 9 compared to the transmissive region of the color filter layer 9. For only monochromatic display, the color filter layer 9 can be omitted. Further, the subpixels previously described are monochromatic pixels.

### (Manufacture Example 1)

The transflective liquid crystal display device shown in FIGS. 1 and 2 was produced. The contrast characteristic of the display device was measured by selectively applying a driving voltage of 4V between the pixel and common electrodes of the transflective liquid crystal display device via the thin film transistors W. The contrast exhibited a large value of 500:1 at an illuminance of 0 lux when the backlight BL was turned on and also a large value of 30:1 even at a = 100,000 lux. Further, the integrated reflectance of the display device was measured at the no-voltage-applied time; the integrating-sphere reflectance exhibited a large value of 5%. Moreover, the transmittance of the display device was measured at the no-voltage-applied time; the transmittance exhibited a large value of 10%.

### (Comparative Example 1)

The transflective type liquid crystal display device shown in FIGS. 5 and 6 was produced. In this case, the aperture ratio of the pixels, the transmittance of the color filter, and the aperture ratio of the transmissive region to the reflective region were similar to those in Manufacture Example 1. The contrast characteristic of the transflective liquid crystal display device according to Comparative Example 1 was measured in the same manner as in Manufacture Example 1. The contrast exhibited a large value of 500:1 at an illuminance of 0 lux when the backlight BL was turned on and also a large value of 30:1 even at a = 100,000 lux. Further, the integrated reflectance of the display device was measured at the no-voltage-applied time; the integrating-sphere reflectance exhibited a large value of 5%. However, when the transmittance of the display device was measured at the no-voltage-applied time, it exhibited a value of 5%, which is only half that in Manufacture Example 1.

### (Comparative Example 2)

The transflective type liquid crystal display device shown in FIGS. 9 and 10 was produced. In this case, the aperture ratio of the pixels, the transmittance of the color filter, and the aperture ratio of the transmissive region to the reflective region were similar to those in Manufacture Example 1. The contrast characteristic of the transflective liquid crystal display device according to Comparative Example 2 was measured in the same manner as in Manufacture Example 1. The contrast exhibited a large value of 500:1 at an illuminance of 0 lux when the backlight BL was turned on and also a large value of 30:1 even at a = 100,000 lux. Further, the integrated reflectance of the display device was measured at the no-voltage-applied time; the integrating-sphere reflectance exhibited a large value of 5%. Moreover, the transmittance of the display device was measured at the no-voltage-applied time; the transmittance exhibited a large value of 10%. However, it was difficult to appropriately perform control that varies the thickness of the liquid crystal layer between the transmissive region and the reflective region. Specifically, the thickness of the insulating film, which determines the difference in height between the reflective electrodes and the transparent electrode, was not uniform. As a result, images were not uniformly displayed.

## Claims

1. A liquid crystal display device comprising:
first and second substrates (2, 1) each having an inner surface and an outer surface ;
a liquid crystal layer (5) held between said first and second substrates (2, 1) and containing a liquid crystal composition;
a linear polarizer (10b) attached to the outer surface of said first substrate (2);
a circular polarizer (10a, 11) attached to the outer surface of said second substrate (1);
a reflective electrode section (7, 8a) which is located on the inner surface of said first substrate (2) and is arranged to reflect light incident from said second substrate (1) to the liquid crystal layer (5) and,
a counter electrode section (8b) which is located on the inner surface of said second substrate (1) and associated with said reflective electrode section (7, 8a) to apply an electric field perpendicular to said substrates (1,2) to said liquid crystal layer (5) in a reflective region corresponding to a range of said reflective electrode section (7, 8a) ; **characterised in that** the reflective electrode section, comprises
a pair of electrodes (7, 8a) which are located on the inner surface of said first substrate (2) and associated with each other to apply a lateral electric field substantially parallel to the plane of the substrates to said liquid crystal layer (5) in a transmissive region existing outside said reflective region and allowing transmission of light incident from said first substrate (2) to said liquid crystal layer (5).

2. The liquid crystal display device according to claim 1, **characterized in that** said reflective electrode section includes a reflective electrode (7) which serves as at least one of said pair of electrodes (7, 8a).

3. The liquid crystal display device according to claim 1, **characterized in that** the first substrate (2) has a wiring (4) and switching device (W) located outside said transmissive region and below said reflective electrode section (7, 8a).

4. The liquid crystal display device according to claim 1, **characterized in that** said circular polarizer includes a combination of a linear polarizing plate (10a) and a quarter wavelength plate (11), and said liquid crystal layer (5) is set to have a substantially quarter wavelength retardation with respect to incident light of wavelength λ = 550 nm.

5. The liquid crystal display device according to claim 1, **characterized in that** said liquid crystal layer (5) contains liquid crystal molecules which are set to a homogeneous alignment at a no-voltage-applied time in a direction orthogonal to the direction of the lateral electric field.

6. The liquid crystal display device according to claim 1, **characterized in that** a color filter layer (9) is formed as an underlayer for said counter electrode section (8b).

7. The liquid crystal display device according to claim 6, **characterized in that** said color filter layer (9) has a higher transmittance in said reflective region than in said transmissive region.

## Patentansprüche

1. Flüssigkristallanzeigevorrichtung, bei welcher vorgesehen sind:
ein erstes und ein zweites Substrat (2, 1), die jeweils eine innere Oberfläche und eine äußere Oberfläche aufweisen;
eine Flüssigkristallschicht (5), die zwischen dem ersten und dem zweiten Substrat (2, 1) gehaltert ist, und eine Flüssigkristallzusammensetzung enthält;
ein Linearpolarisator (10b), der an der äußeren Oberfläche des ersten Substrats (2) angebracht ist;
ein Zirkularpolarisator (10a, 11), der an der äußeren Oberfläche des zweiten Substrats (1) angebracht ist;
ein reflektierender Elektrodenabschnitt (7, 8a), der auf der inneren Oberfläche des ersten Substrats (2) angeordnet ist, und so ausgebildet ist, dass er von dem zweiten Substrat (1) einfallendes Licht zur Flüssigkristallschicht (5) reflektiert, und
ein Gegenelektrodenabschnitt (8b), der auf der inneren Oberfläche des zweiten Substrats (1) angeordnet ist, und dem reflektierenden Elektrodenabschnitt (7, 8a) zugeordnet ist, um ein elektrisches Feld senkrecht zu den Substraten (1, 2) an die Flüssigkristallschicht (5) in einem reflektierenden Bereich entsprechend einem Bereich des reflektierenden Elektrodenabschnitts (7, 8a) anzulegen; **dadurch gekennzeichnet, dass** der reflektierende Elektrodenabschnitt aufweist
ein Paar von Elektroden (7, 8a), die auf der inneren Oberfläche des ersten Substrats (2) angeordnet sind, und einander so zugeordnet sind, dass ein seitliches elektrisches Feld im Wesentlichen parallel zur Ebene der Substrate an die Flüssigkristallschicht (5) in einem optisch durchlässigen Bereich angelegt wird, der außerhalb des reflektierenden Bereichs vorhanden ist, um den Durchlass von Licht, das von dem ersten Substrat (2) einfällt, auf die Flüssigkristallschicht (5) ermöglichen.

2. Flüssigkristallanzeigevorrichtung nach Anspruch 1, **dadurch gekennzeichnet, dass** der reflektierende Elektrodenabschnitt eine reflektierende Elektrode (7) aufweist, die als zumindest eine Elektrode des Paars der Elektroden (7, 8a) dient.

3. Flüssigkristallanzeigevorrichtung nach Anspruch 1, **dadurch gekennzeichnet, dass** das erste Substrat (2) eine Verdrahtung (4) und eine Schaltvorrichtung (W) aufweist, angeordnet außerhalb des optisch durchlässigen Bereiches und unterhalb des reflektierenden Elektrodenabschnitts (7, 8a).

4. Flüssigkristallanzeigevorrichtung nach Anspruch 1, **dadurch gekennzeichnet, dass** der Zirkularpolarisator eine Kombination aus einer linear polarisierenden Platte (10a) und einer Viertelwellenlängenplatte (11) aufweist, und die Flüssigkristallschicht (5) so eingestellt ist, dass sie eine Verzögerung von im Wesentlichen einer Viertelwellenlänge in Bezug auf einfallendes Licht mit einer Wellenlänge λ = 550 nm aufweist.

5. Flüssigkristallanzeigevorrichtung nach Anspruch 1, **dadurch gekennzeichnet, dass** die Flüssigkristallschicht (5) Flüssigkristallmoleküle enthält, die auf eine homogene Ausrichtung zum Zeitpunkt, wenn keine Spannung anliegt, in einer Richtung orthogonal zur Richtung des seitlichen elektrischen Feldes eingestellt sind.

6. Flüssigkristallanzeigevorrichtung nach Anspruch 1, **dadurch gekennzeichnet, dass** eine Farbfilterschicht (9) als eine Unterschicht für den Gegenelektrodenabschnitt (8b) ausgebildet ist.

7. Flüssigkristallanzeigevorrichtung nach Anspruch 6, **dadurch gekennzeichnet, dass** die Farbfilterschicht (9) einen höheren Transmissionsfaktor in dem reflektierenden Bereich aufweist als in dem optisch durchlässigen Bereich.

## Revendications

1. Dispositif d'affichage à cristaux liquides comprenant
des premier et second substrats (2, 1) ayant chacun une surface interne et une surface externe ;
une couche de cristaux liquides (5) maintenue entre lesdits premier et second substrats (2, 1) et contenant une composition de cristaux liquides ;
un polariseur linéaire (10b) relié à la surface externe dudit premier substrat (2) ;
un polariseur circulaire (10a, 11) relié à la surface externe dudit second substrat (1) ;
une section d'électrode réfléchissante (7, 8a) qui est située sur la surface interne dudit premier substrat (2) et est disposée à la lumière incidente depuis ledit second substrat (1) sur la couche de cristaux liquides (5) et
une section d'électrode opposée (8b) qui est située sur la surface interne dudit second substrat (1) et associée à ladite section d'électrode réfléchissante (7, 8a) pour appliquer un champ électrique perpendiculaire aux dits substrats (1, 2) sur ladite couche de cristaux liquides (5) dans une zone réfléchissante correspondant à une portée de ladite section d'électrode réfléchissante (7, 8a) ; **caractérisé en ce que** la section d'électrode réfléchissante comprend :
une paire d'électrodes (7, 8a) qui sont situées sur la surface interne dudit premier substrat (2) et associées l'une à l'autre pour appliquer un champ électrique latéral essentiellement parallèle au plan des substrats sur ladite couche de cristaux liquides (5) dans une section transmissive existant à l'extérieur de ladite zone réfléchissante et permettant la transmission de la lumière incidente depuis ledit premier substrat (2) sur ladite couche de cristaux liquides (5).

2. Dispositif d'affichage à cristaux liquides selon la revendication 1, **caractérisé en ce que** ladite section d'électrode réfléchissante inclut une électrode réfléchissante (7) qui sert au moins au tant que l'une de ladite paire d'électrodes (7, 8a).

3. Dispositif d'affichage à cristaux liquides selon la revendication 1, **caractérisé en ce que** le premier substrat (2) présente un câblage (4) et un dispositif de commutation (W) situé à l'extérieur de ladite zone transmissive et en dessous de ladite section d'électrode réfléchissante (7, 8a).

4. Dispositif d'affichage à cristaux liquides selon la revendication 1, **caractérisé en ce que** ledit polariseur circulaire inclut une combinaison de plaque polarisante linéaire (10a) et une plaque de longueur de quart d'onde (11), et ladite couche de cristaux liquides (5) est définie pour posséder un retard de longueur de quart d'onde par rapport à la lumière incidente de longueur d'onde λ = 550 mm.

5. Dispositif d'affichage à cristaux liquides selon la revendication 1, **caractérisé en ce que** ladite couche de cristaux liquides (5) contient des molécules de cristaux liquides qui sont mis en alignement homogène à un moment où aucune tension n'est appliquée dans une direction perpendiculaire à la direction du champ électrique latéral.

6. Dispositif d'affichage à cristaux liquides selon la revendication 1, **caractérisé en ce qu'**une couche de filtre de couleur (9) est formée en tant que sous-couche pour ladite section d'électrode opposée (8b).

7. Dispositif d'affichage à cristaux liquides selon la revendication 6, **caractérisé en ce que** ladite couche de filtre de couleur (9) présente une transmittance dans ladite zone réfléchissante supérieure à dans ladite zone transmittive.
